# EUROPEAN PATENT SPECIFICATION

(11) **EP 0 726 182 B1**
(45) Date of publication and mention of the grant of the patent: **17.05.2000**
(21) Application number: 96101589.8
(22) Date of filing: 05.02.1996
(51) Int. Cl.: B60P 1/30, E01H 1/08, A01D 34/71

(54) **Device for tipping a bin**
Vorrichtung zum Kippen eines Behälters
Dispositif pour basculer un récipient

(30) Priority: 13.02.1995 IT PD950036
(43) Date of publication of application: 14.08.1996
(73) Proprietor: ANTONIO CARRARO S.p.A., 35011 Campodarsego (Padova) (IT)
(72) Inventor: Martignon, Girolamo, I-35010 Borgoricco (Padova) (IT)
(74) Representative: Modiano, Guido, Dr.-Ing.

(56) References cited:
- CH-A- 584 616
- FR-A- 2 466 182
- US-A- 4 487 007
- US-A- 4 523 788
- US-A- 4 984 420

## Description

The present invention relates to a tipping bin, particularly but not exclusively adapted for being installed on a special multipurpose vehicle, on a truck, or the like, according to the characteristics of the preamble of claim 1.

Bins are currently commonly used to load, transport, and unload garbage, waste, or other residues produced for example by mowing grass or by gathering dead leaves.

These bins are commonly installed on special multipurpose vehicles, on truck, or the like.

The material is placed in these bins manually by the operators or is aspirated directly by means of particular aspiration devices.

Once it has been transported to the unloading site, the material contained in the bin is unloaded by tipping said bin.

In scarcely advanced tipping bin models, the tipping operation occurs manually, optionally with the aid of appropriate kinematic systems that decrease the force applied by the operators and furthermore allow them to handle said bin.

In more advanced models, the tipping of the bin occurs instead automatically by means of appropriate devices which, despite their plurality of embodiments, currently force said bin to perform substantially two translatory motions and one rotary motion.

More specifically, the bin is forced to perform an upward translatory motion and a substantially horizontal translatory motion so as to move beyond the edge of the supporting surface that is rigidly coupled to the special vehicle, to the truck, or the like.

Once these translatory motions have been performed, the bin is then turned about a rotation axis lying inside it or adjacent thereto, in order to perform actual tipping and unloading of the material contained therein.

The translatory motions require separate actuators, and in the constructively more complicated cases it is necessary to adopt an additional actuator to tip the bin.

Tipping bins of the manual type, despite being constructively cheap, have severe limitations as regards the load that can be transported inside them, if the fact is considered that the load will subsequently have to be handled by operators.

As regards the above-described automatic tipping bins, although they achieve their task, they entail very high constructive complexity and consequent very high operating, maintenance, and purchase costs limiting therefore their use.

Furthermore, the translatory motions that must be performed before and after the tipping stage considerably increase the unloading times, and in some cases this factor can have a certain importance, especially in financial terms.

US-A-4523788 discloses a conventional tipping bin of the type in which the bin is first slidably raised along upwardly and rearwardly inclined guides, and the bin is subsequently backwardly rotated while in this raised position.

Another type of tipping bin is disclosed in FR-A-2466182 in the form of a trailer for tipping maize heads into a silo and having a combination of characteristics as set forth in the preamble of the appended claim 1.

A principal aim of the present invention is to provide a tipping bin the constructive simplicity whereof is competitive with respect to that of conventional types.

Accordingly, an object of the present invention is to provide a tipping bin the movement whereof is precise and has execution times not longer than those of conventional types.

Another object of the present invention is to provide a tipping bin that can be manufactured with conventional technologies.

Another object of the present invention is to provide a tipping bin the purchase, maintenance, and operating costs whereof are competitive with respect to conventional types, allowing to produce models that can be purchased even by clients whose financial resources are not particularly substantial.

Another object of the present invention is to provide a tipping bin that is reliable and simple to use even for nonspecialized operators.

In accordance with the invention, there is provided a tipping bin as defined in the appended claims.

Further characteristics and advantages of the present invention will become apparent from the following detailed description of an embodiment thereof, illustrated only by way of non-limitative example in the accompanying drawings,
wherein:

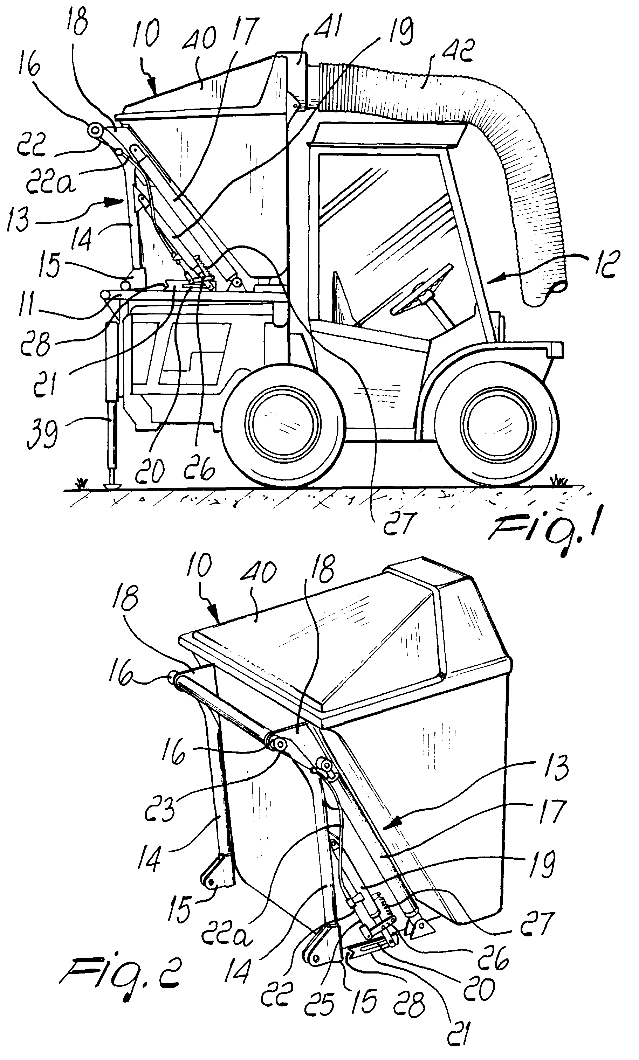

figure 1 is a side view of the tipping bin according to the invention, installed on a special vehicle;

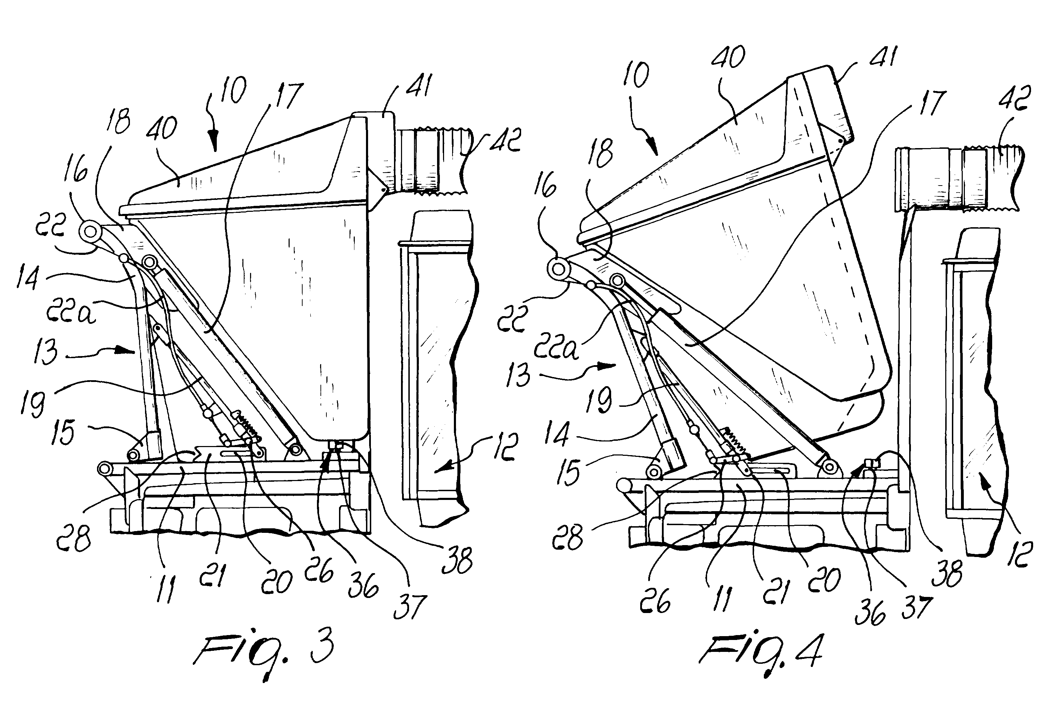

figure 2 is an axonometric view of the tipping bin according to the invention;

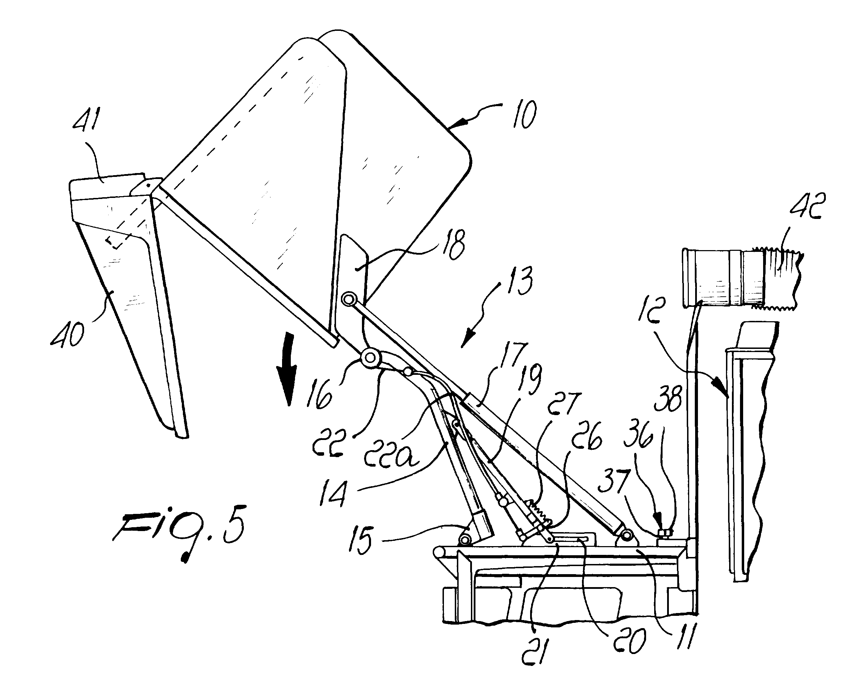

figures 3, 4, and 5 are side views of the tipping bin according to the invention, in different operating steps;

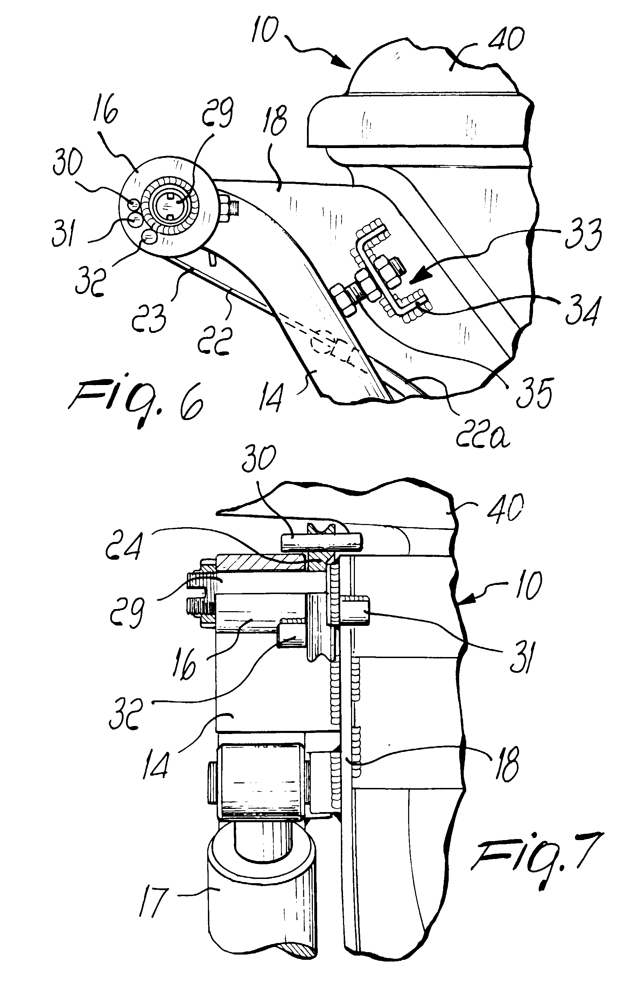

figures 6 and 7 are, respectively, partially sectional side and front views of a detail of the tipping bin according to the invention.

With reference to the figures, a tipping bin according to the invention is generally designated by the reference numeral 10.

The bin, in this case, is mounted on a supporting structure 11 that is in turn supported by, and rigidly coupled to, the rear part of a special vehicle 12.

The bin 10 comprises a tipping device, generally designated by the reference numeral 13, that comprises two arms 14 arranged at the sides of said bin 10.

Since the tipping device 13 is symmetrical, in the following description reference is made to one of the two arms 14; it is understood that the description also applies to the other arm.

Each one of the arms 14 has a first end 15 that is rotatably coupled in a region adjacent to the edge of the supporting structure 11 and a second end 16 that is free and is rotatably connected to the bin 10 at the upper edge.

The rotary coupling that corresponds to the first end 15 forms a first rotation axis adapted to make the bin 10 perform a first revolving motion that makes it protrude beyond the edge of the special vehicle 12, whereas the rotary coupling corresponding to the second end 16 forms a second rotation axis that again makes the bin 10 rotate so as to move from a loading position, with the opening directed upwards, to an unloading position, with the opening directed downwards.

The tipping device 13 comprises, in this case, movement means that comprise an oleodynamic actuator 17 for each one of the arms 14.

The actuator 17 has an end that is rotatably coupled to the supporting structure 11, whereas the other end is rotatably coupled to a plate 18 that is rigidly coupled to the bin 10.

The second end 16 of the arm 14 is also rotatably coupled to said plate 18.

More specifically, the actuator 17 is rotatably coupled to the plate 18 proximate to said second rotation axis, but the longitudinal axis along which the action of the actuator 17 occurs never passes through said second axis.

The tipping device 13 also comprises, for each one of the actuators 17, a first rod member 19 in which one end is slidingly retained inside a slotted hole 20 formed in a guide 21 that is rigidly coupled to the supporting structure 11 and the other end is rotatably coupled, in an approximately median region, to the corresponding arm 14.

The first rod member 19 supports means for locking and releasing its motion with respect to the guide 21.

More specifically, said locking and release means comprise a cable 22 that is inserted in a sheath 22a that allows it to act as a traction element; said cable has an end 23 that surrounds a sheave 24, whereas the other end 25 is rotatably coupled to the end of a second rod member 26 that forms a rocker which is in turn rotatably coupled to the first rod member 19.

The other end of the second rod member 26 is fixed to the end of a helical spring 27, the other end whereof is connected to the first rod member 19.

When the end of said second rod member 26 that slides in the guide 21 is at the end of its stroke on the side directed towards the corresponding arm 14, the end of said second rod member 26 that is directed toward the corresponding arm 14 upon assembly anchors to an end of said guide that is shaped to as to form a recess 28.

The release of the anchored end of the second rod member 26 occurs by pulling the cable 22 when said cable winds on the sheave 24.

It is specified that the sheave 24 is coaxially keyed to a shaft 29 that forms both the second rotation axis and the pivoting between the corresponding arm 14 and the plate 18.

The tipping device 13 also comprises traction means for movement, so as to wind the cable 22, that are kinematically linked to the return motion of the bin 10; said traction means are formed, in this case, by a first pin 30 that passes at right angles through the sheave 24 and has a movement path that interferes with a second pin 31 that is directly rigidly coupled to the bin 10, in this case by welding.

The traction means also comprise a first stroke limiter 32, also constituted by a pin that is rigidly coupled to the corresponding arm 14.

The bin 10 comprises second stroke limiters that are fixed thereto and are adapted to lock its movement both relative to the arms 14 and to the supporting structure 11.

In this case, there is provided a second stroke limiter 33, constituted by a bridge-like element 34 that is indeed fixed to the bin 10 and wherein a threaded pin 35 is engaged by threaded coupling; the end of said pin that is directed outwards abuts against the corresponding arm 14 in the initial or final position of the bin 10.

There is also a second stroke limiter 36 that is fixed to the supporting structure 11 and is constituted, in this case, by a threaded pin 37 with an enlarged head portion 38 at the free end.

The bin 10 also comprises means for stabilizing the special vehicle 12 which are constituted, in this case, by a hydraulic jack 39 and by two mechanical jacks not shown in the figures.

The hydraulic jack 39 and the two mechanical jacks are arranged so as to substantially form a triangle.

The bin 10, in this case, is made of fiber-reinforced plastics and is provided with an upper lid 40 having no closure devices and opening in the tipped position simply by gravity.

The lid 40 also has openings the surface whereof is greater than the surface of the suction port 41 also formed on the bin 10; in this manner, the aspirated material can fall by gravity due to the pressure loss.

The suction port 41 is connected to a suction duct 42 when the bin 10 is in the loading position.

At the front, the bin 10 is also provided with a vertical slot, not shown in the figures, which is closed by transparent material and allows to view the filling level of said bin 10.

In practice, operation is as follows: starting from a position for loading the material, the bin 10 is arranged so that the lid 40 faces upwards and is closed by gravity.

By feeding the actuators 17, said actuators move the corresponding arms 14.

In a first stage, the movement is simply guided by the first rod members 19, which ensure an almost axial separation of the suction port 41 of the bin 10 from the suction duct 42.

When the first rod members 19 have reached the stroke limit of the respective guides 21, the corresponding second rod members 26 anchor to said guides, preventing their further motion.

Said locking of the first rod members 19 causes the corresponding locking of the arms 14.

Once the arms 14 have been locked, they substantially become fixed retention elements and therefore an additional action of the actuators 17 forces the plates 18, and therefore the bin 10, to perform a rotation about the second rotation axis.

This rotation produces the actual tipping, which causes the lid 40 to open by gravity.

Once the material contained in the bin has been unloaded, the actuators 17 are made to retract, making the bin 10 to rotate again about the second rotation axis.

In the return motion, however, the second pins 31, by interfering with the corresponding first pins 30, cause said first pins to rotate, thus producing the winding of the corresponding cables 22 on the respective sheaves 24.

The winding of the cables 22 on the corresponding sheaves 24 determines the traction of said cables on the second rod member which, being released from the lock on the guide 21, allows the corresponding first rod member 19 to slide along the slotted hole 20 to return to the initial stroke limiter.

The bin 10 can thus permanently return to the loading position, in which the lid 40 is directed upwards.

Prior to the actual movement of the bin 10, it is necessary to stabilize the special vehicle 12 by appropriately placing and loading the jack 39 and the mechanical jacks, not shown in the figures.

In practice it has been observed that the intended aim and objects have been achieved; in particular, the constructive simplicity of the invention should be noted; however, this simplicity does not affect at all the precision and effectiveness of the kinematic system for loading and unloading the bin.

Furthermore, the overall sturdiness of the tipping device should be noted; said device requires little maintenance, which can in any case be performed very simply when necessary.

Furthermore, its easy use is noted, since movement is performed substantially automatically by the device proper, which merely requires activation on the part of the operator.

Finally, the extreme constructive flexibility of the invention which can be installed on a wide range of special vehicles, trucks, or the like, is observed, as well as its low purchase, maintenance, and operating costs.

The present invention is susceptible of numerous modifications and variations, all of which are within the scope of the inventive concept.

The constructive details may be replaced with other technically equivalent elements.

The materials and the dimensions may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Tipping bin, particularly adapted for being installed on a multipurpose special vehicle (12), on a truck, or the like, comprising tipping means (13) that make the bin perform a first revolving motion about a first rotation axis formed by the rotary coupling that corresponds to a first end (15) of each of the arms (14) of the tipping device (13) being adjacent to a supporting structure (11) that is rigidly coupled to said special vehicle (12), truck, or the like, so as to make said bin (10) protrude externally beyond the edge thereof, and a second rotary motion about a second axis formed by the rotary coupling that corresponds to a second end (16) of each of the arms (14) of the tipping device (13) passing through, or proximate to, said bin (10), said second motion moving said bin (10) from a loading position, with the opening directed upwards, to an unloading position, with the opening directed downwards, **characterized in that** said tipping means (13) comprise at least one actuator (17) which when actuated during an initial stage performs said first rotary motion of said tipping bin about said first rotation axis and which when actuated during an additional successive stage performs said second rotary motion of said tipping bin about said second rotation axis, whereby the same said at least one actuator (17) performs both said first and second rotary motions.

2. Bin according to claim 1, characterized in that said tipping means comprise a tipping device (13) that in turn comprises at least one arm (14) having a first end (15) which is rotatably coupled, in a region adjacent to the edge of said supporting structure (11), so as to form said first rotation axis, and a second free end (16), with which said bin (10) is rotatably connected at the upper edge so as to provide said second rotation axis, means (17) being provided for moving said bin.

3. Bin according to claim 2, characterized in that said at least one actuator (17) has one end which is rotatably coupled to said supporting structure (11) and the other end which is rotatably coupled, directly or indirectly, to said bin (10), proximate to said second axis, the longitudinal axis along which the action of said at least one actuator occurs never passing through said second axis.

4. Bin according to claim 3, characterized in that said at least one actuator (17) is of the oleodynamic type.

5. Bin according to one or more of the preceding claims, characterized in that it comprises at least one first rod member (19), in which one end is slidingly coupled to a guide (21) that is rigidly coupled to said supporting structure (11), the other end being rotatably coupled to said arm (14), means (22) being provided for locking and releasing the movement of said at least one rod member (19).

6. Bin according to claim 5, characterized in that said locking and release means comprise at least one cable-like traction element (22) in which one end winds on a sheave (24), the other end being rotatably coupled to the end of a second rod member (26), which forms a rocker and is in turn rotatably coupled to said at least one first rod member (19), the other end of said second rod member (26) being fixed to elastic return means (27) which are in turn fixed to said at least one first rod member (19).

7. Bin according to claim 6, characterized in that said second rod member (26) has an end which, upon assembly, is directed towards said arm (14) and is anchored to an appropriately shaped end of said guide (21) when the end of said at least one first rod member (19) that slides in said guide (21) is at the stroke limit on the side directed towards said arm (14), release occurring by pulling said cable-like traction element (22) when it winds on the sheave (24).

8. Bin according to one or more of the preceding claims 6-7, characterized in that said sheave (24) is coaxially keyed to a shaft (29) that forms said second rotation axis, traction means (30) being provided which move it so as to wind said cable-like traction element (22), in kinematic connection with the return motion of said bin (10).

9. Bin according to claim 8, characterized in that all the traction means comprise a first pin (30) that passes at right angles through said sheave (24) and has a movement path that interferes with a second pin (31) that is rigidly coupled to said bin (10) directly or indirectly.

10. Bin according to claims 8 and 9, characterized in that it comprises a first stroke limiter (32) that interferes with the motion of said first pin (30).

11. Bin according to one or more of the preceding claims, characterized in that it comprises second stroke limiters (33,36) that are applied to said bin (10) so as to lock the movement thereof relative to said at least one arm (14) and to said supporting structure (11).

12. Bin according to claim 11, characterized in that at least one of said second stroke limiters (33) is constituted by a bridge-like element (34) that is fixed to said bin (10) and in which a threaded pin (35) is engaged by threaded coupling, the outward end of said pin (35) abutting against said at least one arm (14) in the position for loading said bin (10).

13. Bin according to claim 1, characterized in that it comprises at least one second stroke limiter (36) that is fixed to said supporting structure (11).

14. Bin according to one or more of the preceding claims, characterized in that it comprises means (39) for stabilizing said special vehicle (12), truck, or the like, when said bin (10) is moving, such as per se known hydraulic and/or mechanical jacks.

15. Bin according to one or more of the preceding claims, characterized in that it comprises a suction opening (41) connected to a corresponding suction duct (42).

16. Bin according to claim 15, characterized in that it comprises a lid (40) which opens by gravity and has slots or openings the area whereof is substantially larger than the area of said suction opening for creating a pressure loss so that the aspirated material falls by gravity.

17. Bin according to one or more of the preceding claims, characterized in that it comprises a front slot that is closed by means of transparent material and allows viewing of the loading level of said bin (10).

## Patentansprüche

1. Kippbehälter, besonders geeignet zum Montieren auf ein Vielzweck-Spezialfahrzeug (12), einen Lastkraftwagen oder dergleichen, mit Kippmitteln (13), die eine erste Drehbewegung des Behälters um eine erste Drehachse bewirken, die durch die einem ersten Ende (15) jedes Arms (14) der Kippvorrichtung (13) entsprechende Drehverbindung gebildet wird und an eine fest mit dem Spezialfahrzeug (12), Lastkraftwagen oder dergleichen verbundene Trägerstruktur (11) angrenzt, um den Behälter (10) in eine nach außen über die Kante des Fahrzeugs vorstehende Position zu bringen, und die eine zweite Drehbewegung um eine zweite Achse bewirken, die durch die einem zweiten Ende (16) jedes Arms (14) der Kippvorrichtung (13) entsprechende Drehverbindung gebildet wird und durch den Behälter (10) oder nahe zu ihm verläuft, wobei die zweite Bewegung den Behälter (10) aus einer Ladestellung, bei der die Öffnung nach oben gerichtet ist, in eine Entladestellung, bei der die Öffnung nach unten gerichtet ist, bewegt, dadurch **gekennzeichnet**, daß die Kippmittel (13) mindestens einen Betätiger (17) enthalten, der bei Betätigung in einer Anfangsstufe die erste Drehbewegung des Kippbehälters um die erste Drehachse und bei Betätigung in einer weiteren, darauf folgenden Stufe die zweite Drehbewegung des Kippbehälters um die zweite Drehachse durchführt, wobei derselbe mindestens eine Betätiger (17) sowohl die erste als auch die zweite Drehbewegung ausführt.

2. Behälter nach Anspruch 1, dadurch **gekennzeichnet**, daß die Kippmittel eine Kippvorrichtung (13) enthalten mit mindestens einem Arm (14) mit einem ersten Ende (15), das in einem Bereich angrenzend an die Kante der Trägerstruktur (11) drehbar gekoppelt ist und so die erste Drehachse bildet, und mit einem zweiten, freien Ende (16), mit dem der Behälter (10) an der oberen Kante drehbar verbunden ist und so die zweite Drehachse darstellt, und daß Mittel (17) zum Bewegen des Behälters vorgesehen sind.

3. Behälter nach Anspruch 2, dadurch **gekennzeichnet**, daß der mindestens eine Betätiger (17) mit einem Ende drehbar mit der Tägerstruktur (11) und mit dem anderen Ende drehbar, direkt oder indirekt in der Nähe der zweiten Achse mit dem Behälter (10) verbunden ist, wobei die Längsachse, entlang der die Bewegung des mindestens einen Betätigers verläuft, in keinem Fall die zweite Achse durchläuft.

4. Behälter nach Anspruch 3, dadurch **gekennzeichnet**, daß der mindestens eine Betätiger (17) ein Öldynamik-Betätiger ist.

5. Behälter nach einem oder mehreren der vorhergehenden Ansprüche, dadurch **gekennzeichnet**, daß er mindestens ein erstes Stabelement (19) hat, dessen eines Ende verschiebbar mit einer fest an der Trägerstruktur (11) befestigten Führung (21) gekoppelt ist, und dessen anderes Ende drehbar mit dem Arm (14) verbunden ist, und daß Mittel (22) zum Blockieren und Freigeben der Bewegung des mindestens einen Stabelements (19) vorgesehen sind.

6. Behälter nach Anspruch 5, dadurch **gekennzeichnet**, daß die Mittel zum Blockieren und Freigeben mindestens ein seilartiges Zugelement (22) enthalten, dessen eines Ende sich auf eine Scheibe (24) wickelt, und dessen anderes Ende drehbar mit einem Ende eines zweiten Stabelements (26) verbunden ist, das eine Wippe bildet und wiederum drehbar mit dem mindestens einen ersten Stabelement (19) verbunden ist, während das andere Ende des zweiten Stabelements (26) an elastischen Rückführmitteln (27) befestigt ist, die wiederum an dem mindestens einen ersten Stabelement (19) befestigt sind.

7. Behälter nach Anspruch 6, dadurch **gekennzeichnet**, daß das zweite Stabelement (26) ein Ende hat, welches nach der Montage zu dem Arm (14) hin zeigt und an einem geeignet geformten Ende der Führung (21) verankert wird, wenn sich das in der Führung (21) laufende Ende des mindestens einen ersten Stabelements (19) auf der in Richtung des Arms (14) zeigenden Seite an der Hubgrenze befindet, und daß die Freigabe durch Ziehen des seilartigen Zugelements (22) erfolgt, wenn dieses sich auf die Scheibe (24) wickelt.

8. Behälter nach einem oder mehreren der vorhergehenden Ansprüche 6 bis 7, dadurch **gekennzeichnet**, daß die Scheibe (24) koaxial auf eine Welle (29) geklemmt ist, welche die zweite Drehachse bildet, und Zugmittel (30) vorgesehen sind, die sie so bewegen, daß sie das seilartige Zugelement (22) in kinematischer Verbindung mit der Rückbewegung des Behälters (10) aufwickelt.

9. Behälter nach Anspruch 8, dadurch **gekennzeichnet**, daß alle Zugmittel einen ersten Stift (30) haben, der senkrecht durch die Scheibe (24) verläuft und einen Bewegungsweg hat, der mit einem zweiten Stift (31) in Konflikt tritt, der direkt oder indirekt starr mit dem Behälter (10) verbunden ist.

10. Behälter nach den Ansprüchen 8 und 9, dadurch **gekennzeichnet**, daß er einen ersten Hubbegrenzer (32) hat, der die Bewegung des ersten Stiftes (30) behindert.

11. Behälter nach einem oder mehreren der vorhergehenden Ansprüche, dadurch **gekennzeichnet**, daß er zweite Hubbegrenzer (33, 36) hat, die so auf den Behälter (10) angewendet sind, daß sie seine Bewegung relativ zu dem mindestens einen Arm (14) und zu der Trägerstruktur (11) blockieren.

12. Behälter nach Anspruch 11, dadurch **gekennzeichnet**, daß mindestens einer der zweiten Hubbegrenzer (33) aus einem brückenartigen Element (34) besteht, das an dem Behälter (10) angebracht ist und in dem ein Gewindestift (35) durch Gewindekopplung festgehalten wird, dessen äußeres Ende in der Ladestelleung des Behälters (10) an den mindestens einen Arm (14) anstößt.

13. Behälter nach Anspruch 1, dadurch **gekennzeichnet**, daß er mindestens einen zweiten Hubbegrenzer (36) hat, der an der Trägerstruktur (11) befestigt ist.

14. Behälter nach einem oder mehreren der vorhergehenden Ansprüche, dadurch **gekennzeichnet**, daß er Mittel (39) zum Stabilisieren des Spezialfahrzeugs (12), Lastkraftwagens oder dergleichen während des Bewegens des Behälters (10) hat, wie z.B. an sich bekannte hydraulische und/oder mechanische Standbeine.

15. Behälter nach einem oder mehreren der vorhergehenden Ansprüche, dadurch **gekennzeichnet**, daß er eine Ansaugöffnung (41) hat, die mit einer entsprechenden Ansaugleitung (42) verbunden ist.

16. Behälter nach Anspruch 15, dadurch **gekennzeichnet**, daß er einen Deckel (40), der sich durch Schwerkraft öffnet, und Schlitze oder Öffnungen hat, deren Querschnitt wesentlich größer als der der Ansaugöffnung ist, um einen Druckverlust herzustellen, damit das angesaugte Material durch Schwerkraft fällt.

17. Behälter nach einem oder mehreren der vorhergehenden Ansprüche, dadurch **gekennzeichnet**, daß er einen Schlitz an der Vorderseite hat, der mit durchsichtigem Material verschlossen ist und das Beobachten des Füllstands des Behälters (10) ermöglicht.

## Revendications

1. Récipient basculant, particulièrement adapté pour être installé sur un véhicule spécial polyvalent (12), sur un chariot, ou analogue, comprenant des moyens de basculement (13) qui permettent au récipient de réaliser un premier mouvement pivotant autour d'un premier axe de rotation formé par l'accouplement rotatif qui correspond à une première extrémité (15) de chacun des bras (14) du dispositif basculant (13), qui est adjacent à une structure de support (11) qui est rigidement accouplée audit véhicule spécial (12), chariot, ou analogue, de façon que ledit récipient (10) fasse saillie extérieurement au-delà du bord de celui-ci, et un second mouvement rotatif autour d'un second axe formé par l'accouplement rotatif qui correspond à une seconde extrémité (16) de chacun des bras (14) du dispositif basculant (13), traversant, ou à proximité de, ledit récipient (10), ledit second mouvement déplaçant ledit récipient (10) à partir d'une position de chargement, avec l'ouverture dirigée vers le haut, vers une position de déchargement, avec l'ouverture dirigée vers le bas,
caractérisé en ce que lesdits moyens de basculement (13) comprennent au moins un actionneur (17) qui, quand il est actionné pendant une étape initiale, réalise ledit premier mouvement rotatif dudit récipient basculant autour dudit premier axe de rotation et qui, quand il est actionné pendant une étape successive additionnelle, réalise ledit second mouvement rotatif dudit récipient basculant autour dudit second axe de rotation, grâce à quoi le même actionneur (17) réalise à la fois lesdits premier et second mouvements rotatifs.

2. Récipient selon la revendication 1,
caractérisé en ce que lesdits moyens de basculement comprennent un dispositif basculant (13) qui, à son tour, comprend au moins un bras (14) ayant une première extrémité (15) qui est couplée, de façon rotative, dans une région adjacente au bord de ladite structure de support (11), de façon à former ledit premier axe de rotation, et une seconde extrémité libre (16) à laquelle ledit récipient (10) est relié, de façon rotative, au niveau du bord supérieur de façon à fournir ledit second axe de rotation, des moyens (17) étant prévus pour déplacer ledit récipient.

3. Récipient selon la revendication 2,
caractérisé en ce que ledit actionneur (17) présente une extrémité qui est couplée, de façon rotative, à ladite structure de support (11) et l'autre extrémité qui est couplée, de façon rotative, directement ou indirectement, audit récipient (10), à proximité dudit second axe, l'axe longitudinal le long duquel l'action dudit actionneur survient, ne traversant jamais ledit second axe.

4. Récipient selon la revendication 3,
caractérisé en ce que ledit actionneur (17) est du type oléodynamique.

5. Récipient selon l'une ou plusieurs des revendications précédentes,
caractérisé en ce qu'il comprend au moins un premier élément de tige (19), dans lequel une extrémité est couplée de façon coulissante à un guide (21) qui est rigidement couplé à ladite structure de support (11), l'autre extrémité étant couplée de façon rotative audit bras (14), des moyens (22) étant prévus pour verrouiller et libérer le mouvement dudit élément de tige (19).

6. Récipient selon la revendication 5,
caractérisé en ce que lesdits moyens de verrouillage et de libération comprennent au moins un élément de traction (22) du type câble, dans lequel une extrémité s'enroule sur une poulie (24), l'autre extrémité étant couplée de façon rotative à l'extrémité d'un second élément de tige (26), qui forme un levier et est à son tour couplé de façon rotative audit premier élément de tige (19), l'autre extrémité dudit second élément de tige (26) étant fixée à des moyens de rappel élastique (27) qui sont, à leur tour, fixés audit premier élément de tige (19).

7. Récipient selon la revendication 6,
caractérisé en ce que ledit second élément de tige (26) présente une extrémité qui, lors de l'assemblage, est dirigée vers ledit bras (14) et est ancrée à une extrémité conformée de façon appropriée dudit guide (21) quand l'extrémité dudit premier élément de tige (19), qui coulisse dans ledit guide (21), est en fin de course sur le côté dirigé vers ledit bras (14), la libération survenant en tirant ledit élément de traction (22) du type câble quand il s'enroule sur la poulie (24).

8. Récipient selon l'une ou plusieurs des revendications précédentes 6 - 7,
caractérisé en ce que ladite poulie (24) est clavetée coaxialement sur un arbre (29) qui forme ledit second axe de rotation, des moyens de traction (30) étant prévus qui le déplacent de façon à enrouler ledit élément de traction (22) du type câble, en relation cinématique avec le mouvement de retour dudit récipient (10).

9. Récipient selon la revendication 8,
caractérisé en ce que tous les moyens de traction comprennent une première goupille (30) qui traverse à angle droit ladite poulie (24) et présente une trajectoire qui interfère avec une seconde goupille (31) qui est rigidement couplée audit récipient (10) directement ou indirectement.

10. Récipient selon les revendications 8 et 9,
caractérisé en ce qu'il comprend un premier limiteur de course (32) qui interfère avec le mouvement de ladite première goupille (30).

11. Récipient selon l'une ou plusieurs des revendications précédentes,
caractérisé en ce qu'il comprend des seconds limiteurs de course (33, 36) qui sont appliqués audit récipient (10) de façon à verrouiller le mouvement de celui-ci par rapport audit bras (14) et à ladite structure de support (11).

12. Récipient selon la revendication 11,
caractérisé en ce qu'au moins un desdits seconds limiteurs de course (33) est constitué par un élément en forme de pont (34) qui est fixé audit récipient (10) et dans lequel un boulon fileté (35) est engagé par accouplement à vis, l'extrémité extérieure dudit boulon (35) venant en butée contre ledit bras (14) dans la position pour charger ledit récipient (10).

13. Récipient selon la revendication 1,
caractérisé en ce qu'il comprend au moins un second limiteur de course (36) qui est fixé à ladite structure de support (11).

14. Récipient selon l'une ou plusieurs des revendications précédentes,
caractérisé en ce qu'il comprend des moyens (39) pour stabiliser ledit véhicule spécial (12), chariot, ou analogue, quand ledit récipient (10) est en mouvement, tels que des vérins mécaniques et/ou hydrauliques connus en soi.

15. Récipient selon l'une ou plusieurs des revendications précédentes,
caractérisé en ce qu'il comprend une ouverture d'aspiration (41) reliée à un conduit d'aspiration correspondant (42).

16. Récipient selon la revendication 15,
caractérisé en ce qu'il comprend un couvercle (40) qui s'ouvre par gravité et présente des fentes ou des ouvertures dont la surface est sensiblement supérieure à la surface de ladite ouverture d'aspiration pour créer une perte de pression, de sorte que la matière aspirée tombe par gravité.

17. Récipient selon l'une ou plusieurs des revendications précédentes,
caractérisé en ce qu'il comprend une fente frontale qui est fermée par l'intermédiaire d'une matière transparente et permet de voir le niveau de charge dudit récipient (10).
